# EUROPEAN PATENT APPLICATION

(11) **EP 4 546 533 A1**
(43) Date of publication of application: **30.04.2025**
(21) Application number: 23907746.4
(22) Date of filing: 20.12.2023
(51) Int. Cl.: H01M 50/264, H01M 50/204, H01M 10/6567, H01M 10/613, H01M 50/553, H01M 50/567, H01M 50/562, H01M 50/227, H01M 50/502

(54) **BATTERY MODULE AND BATTERY PACK COMPRISING SAME**

(30) Priority: 22.12.2022 KR 20220181906; 23.12.2022 KR 20220183602; 19.12.2023 KR 20230185439
(71) Applicant: LG Energy Solution, Ltd., Seoul 07335 (KR)
(72) Inventor: YUN, Hyeonki, Daejeon 34122 (KR); JU, Eunah, Daejeon 34122 (KR); TANNENBERGER, Günter, 85123 Pobenhausen (DE); HARASZTOSI, Uwe, 74172 Neckarsulm (DE); WASSERMANN, Thomas, 74321 Bietigheim-Bissingen (DE)
(74) Representative: Plasseraud IP
(86) International application number: PCT/KR2023/021137
(87) International publication number: WO 2024/136463

(57) **Abstract**

The present disclosure relates to a battery module and a battery pack including the same, and a battery module according to an embodiment of the present disclosure includes a battery cell stack in which a plurality of battery cells is stacked, a module frame configured to accommodate the battery cell stack, an endplate configured to cover the battery cell stack exposed by the module frame, and module coupling portions that are protruding portions provided on a lateral surface of the module frame and a lateral surface of the endplate, in which the module coupling portions include holes penetrated by coupling members.

## Description

### [Technical Field]

### CROSS-REFERENCE TO RELATED APPLICATION

This application claims priority to and the benefit of Korean Patent Application No. 10-2022-0183602 filed in the Korean Intellectual Property Office on December 23, 2022, Korean Patent Application No. 10-2022-0181906 filed in the Korean Intellectual Property Office on December 22, 2022, and Korean Patent Application No. 10-2023-0185439 filed in the Korean Intellectual Property Office on December 19, 2023, the entire contents of which are incorporated herein by reference.

The present disclosure relates to a battery module and a battery pack including the same, and more particularly, to a battery module, which is simply assembled such that process costs are reduced, and a battery pack including the same.

### [Background Art]

As development of technologies and demands for mobile devices are increased, there is a rapidly increasing demand for secondary batteries as energy sources. Therefore, many studies are being conducted on the secondary batteries in order to meet various needs.

A secondary battery is easy to apply to products and has high electrical characteristics such as energy density. Therefore, the secondary battery is widely applied to electric power storage devices and electric or hybrid vehicles, driven by electrical driving sources, as well as portable devices. The secondary battery is considered as a new energy source for improving environmentally-friendly characteristics and energy efficiency because the secondary battery achieves a primary advantage of innovatively reducing the use of fossil fuel, and generates no by-product even though energy is used.

As currently commercially available secondary batteries, there are a nickel cadmium battery, a nickel hydrogen battery, a nickel zinc battery, a lithium secondary battery, and the like. Among these batteries, in comparison with the nickel-based secondary battery, the lithium secondary battery causes almost no memory effect and thus is freely charged or discharged. Further, the lithium secondary battery has a very low self-discharge rate and a high energy density, and thus the lithium secondary battery is in the limelight.

In general, the lithium secondary batteries may be classified, depending on shapes of exterior materials, into a cylindrical or angled secondary battery in which the electrode assembly is embedded in a metal can, and a pouch-type secondary battery in which the electrode assembly is embedded in a pouch configured by an aluminum laminated sheet.

Recently, the secondary battery is required to be used as an energy storage source and needs to have a secondary battery structure with a high capacity, as a result of which there is an increasing demand for a battery pack having a medium-scale or large-scale module structure in which multiple battery modules are assembled and each have a plurality of secondary batteries connected in series or parallel. The battery module has an improved capacity and an increased output because the plurality of battery cells constitutes a battery cell stack by being connected to each other in series or in parallel. In addition, the plurality of battery modules may be mounted together with various types of control and protection systems such as a battery management system (BMS), a cooling system, and the like, thereby constituting the battery pack.

However, because the battery pack has a structure in which the plurality of battery modules are combined, the battery pack may be heavy in weight. For this reason, there is a problem in that a plurality of batteries is not suitable to be loaded into a movable means such as a vehicle.

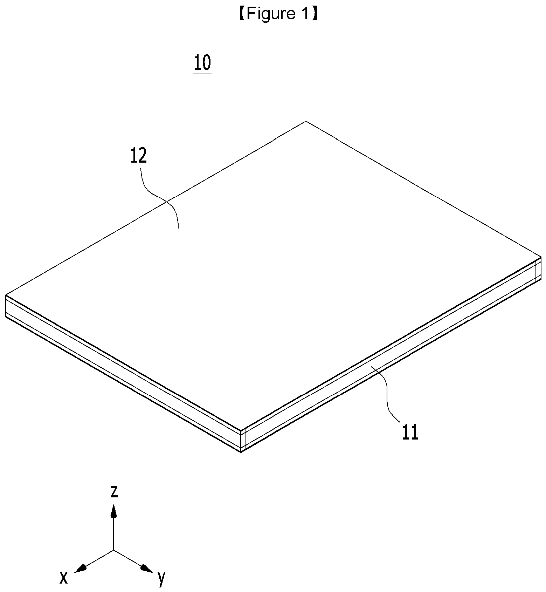

FIG. 1 is a perspective view of a battery pack in the related art.

With reference to FIG. 1, a battery pack 10 in the related art includes a lower pack frame 11 on which a plurality of battery module is mounted, and an upper pack frame 12 positioned above the battery modules. In this case, the lower pack frame 11 and the upper pack frame 12 may be coupled to each other by welding or the like and seal the interior of the battery pack 10.

As described above, because the battery pack 10 in the related art generally includes the lower pack frame 11 and the upper pack frame 12, there have been ongoing issues with the pack frames, such as the reduction in process costs and the simplification of the assembling process. Accordingly, there is a need to develop a new battery pack structure capable of solving the above-mentioned problems.

### [Disclosure]

### [Technical Problem]

The present disclosure attempts to provide an improved battery module capable of reducing costs and process time, simplifying an assembling process, and improving process efficiency, and a battery pack including the same.

However, the object to be achieved by the embodiments of the present disclosure is not limited to the above-mentioned object but may be variously expanded without departing from the technical spirit of the present disclosure.

### [Technical Solution]

A battery module according to an embodiment of the present disclosure includes: a battery cell stack in which a plurality of battery cells is stacked; a module frame configured to accommodate the battery cell stack; an endplate configured to cover the battery cell stack exposed by the module frame; and module coupling portions that are protruding portions provided on a lateral surface of the module frame and a lateral surface of the endplate, in which the module coupling portions include holes penetrated by coupling members.

The module coupling portions may include: a first module coupling portion positioned on a first lateral surface of the module frame; a second module coupling portion positioned on a second lateral surface that is one lateral surface opposite to the first lateral surface of the module frame; and a third module coupling portion protruding from a lateral end of the endplate.

The first module coupling portion provided on one battery module may be positioned while facing the second module coupling portion provided on another battery module.

The first module coupling portion and the second module coupling portion may be positioned at different heights of the battery module and positioned on the same line in a height direction.

The first module coupling portion may include a first hole and a first opening portion that is a portion made by opening a part of an outer peripheral surface that is an edge of the first hole, the second module coupling portion may include a second hole and a second opening portion that is a portion made by opening a part of an outer peripheral surface that is an edge of the second hole, and the third module coupling portion may include third holes that are at least two holes.

The first and second module coupling portions may each be a C-shaped hole.

The first opening portion and the second opening portion may be opened in opposite directions.

The third holes may be positioned on the same line in a longitudinal direction of the battery module.

The third holes may include a third-first hole and a third-second hole, the third-first hole may be positioned to correspond to the first hole, and the third-second hole may be positioned to correspond to the second hole.

The coupling members may sequentially penetrate the third-first hole and the first hole and sequentially penetrate the third-second hole and the second hole.

The battery module may further include a flange portion formed on a lateral surface of the module frame.

A battery pack according to another embodiment of the present disclosure includes: the plurality of battery modules; and a battery pack frame including a lateral pack frame configured to surround the plurality of battery modules, in which a first battery module and a second battery module among the plurality of battery modules are adjacent to each other, and in which the battery pack includes coupling members configured to fixedly couple the first battery module, the second battery module, and the battery pack frame.

The coupling members may be fixedly coupled to pack coupling portions provided on the battery pack frame and module coupling portions provided on the first and second battery modules.

The pack coupling portions may be at least two holes provided in the lateral pack frame, and the at least two holes may be a first pack coupling portion and a second pack coupling portion.

The first pack coupling portion and the second pack coupling portion may be positioned at positions corresponding to the module coupling portions and positioned on the same line in a height direction of the lateral pack frame.

The first pack coupling portion may be provided at a position corresponding to a third-first hole that is one of a hole of a second module coupling portion positioned on a second lateral surface of the module frame of the first battery module and a hole of a third module coupling portion positioned at a lateral end of an endplate of the second battery module.

The second pack coupling portion may be provided at a position corresponding to a third-second hole that is one of a hole of a first module coupling portion positioned on a first lateral surface of the module frame of the second battery module and a hole of a third module coupling portion positioned at a lateral end of an endplate of the second battery module.

The coupling members may sequentially penetrate the first pack coupling portion and the module coupling portion and sequentially penetrate the second pack coupling portion and the module coupling portion.

An overall structure of the battery pack frame may have a shape in which upper and lower portions of the plurality of battery modules are exposed.

The first and second battery modules may further include flange portions formed on lateral surfaces of the module frames, and the flange portion of the first battery module and the flange portion of the second battery module may be coupled by a module fastening member in a state in which the flange portion of the first battery module and the flange portion of the second battery module overlap each other.

A length of the coupling member may be longer than a sum of lengths of the lateral pack frame and the module coupling portion.

### [Advantageous Effects]

According to the embodiments, the battery module and the battery pack may be securely coupled, thereby improving the durability of the battery.

In addition, the structure of the battery pack may be designed in a different way from that in the related art, thereby reducing costs and process costs, simplifying the process of assembling the battery pack, and improving the process efficiency.

The effects of the present disclosure are not limited to the aforementioned effects, and other effects, which are not mentioned above, will be clearly understood by those skilled in the art from the claims.

### [Description of the Drawings]

FIG. 1 is a perspective view of a battery pack in the related art.
FIG. 2 is a perspective view of a battery pack according to an embodiment of the present disclosure.
FIG. 3 is a perspective view of a battery module of the present disclosure.
FIG. 4 is a cross-sectional view illustrating a coupling portion of the battery module of the present disclosure.
FIG. 5 is a transparent perspective view illustrating the coupling portion of the battery module the present disclosure.
FIG. 6 is a perspective view illustrating a state in which the battery module and the battery pack of the present disclosure are coupled.
FIG. 7 is a cross-sectional view illustrating a state in which the battery module and the battery pack of the present disclosure are coupled.

### [Mode for Invention]

Hereinafter, several exemplary embodiments of the present disclosure will be described in detail with reference to the accompanying drawings so that those with ordinary skill in the art to which the present disclosure pertains may easily carry out the exemplary embodiments. The present disclosure may be implemented in various different ways and is not limited to the embodiments described herein.

A part irrelevant to the description will be omitted to clearly describe the present disclosure, and the same or similar constituent elements will be designated by the same reference numerals throughout the specification.

In addition, a size and thickness of each constituent element illustrated in the drawings are arbitrarily shown for convenience of description, but the present disclosure is not limited thereto. In order to clearly describe several layers and regions, thicknesses thereof are enlarged in the drawings. In the drawings, the thicknesses of some layers and regions are exaggerated for convenience of description.

In addition, when one component such as a layer, a film, an area, or a plate is described as being positioned "above" or "on" another component, one component can be positioned "directly on" another component, and one component can also be positioned on another component with other components interposed therebetween. On the contrary, when one component is described as being positioned "directly above" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, unless explicitly described to the contrary, the word "comprise/include" and variations such as "comprises/includes" or "comprising/including" will be understood to imply the inclusion of stated elements, not the exclusion of any other elements.

In addition, throughout the specification, the phrase "in a plan view" means when an object is viewed from above, and the phrase "in a cross-sectional view" means when a cross section made by vertically cutting an object is viewed from a lateral side.

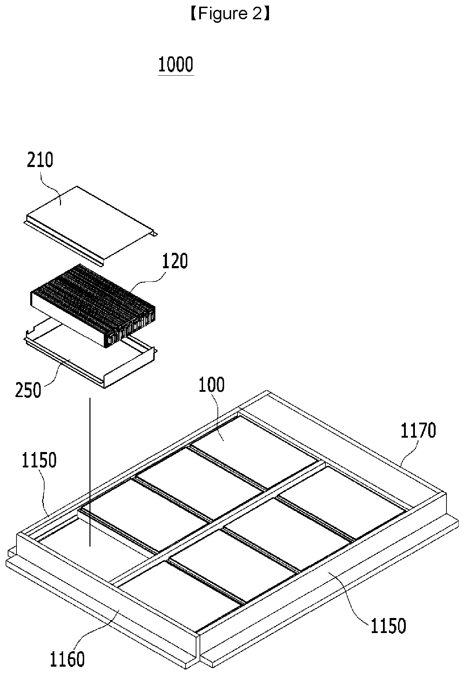

FIG. 2 is a perspective view of a battery pack according to an embodiment of the present disclosure.

With reference to FIG. 2, a battery pack 1000 of the present disclosure includes lateral pack frames 1150, a front frame 1160, and a rear frame 1170 that surround a plurality of battery modules 100.

In this case, in the drawings, a front side and a rear side may be defined in a y-axis direction and a -y-axis direction, lateral sides may be defined in an x-axis direction and a -x-axis direction, and a height may be defined in a z-axis direction. Hereinafter, the present disclosure will be described on the basis of the definition.

The battery module 100 may include a battery cell stack 120 in which a plurality of battery cells is stacked in a preset direction, and a module frame 200 configured to accommodate the battery cell stack 120 and protect the battery cell stack 120 and various types of electrical components connected to the battery cell stack 120 from an external physical impact. The module frame 200 may have various structures. For example, the module frame 200 may include an upper cover 210 and a U-shaped frame 250. The battery cell stack 120 may be mounted between the upper cover 210 and the U-shaped frame 250 and constitute the battery module 100. However, the module frame 200 is not limited thereto. The module frame 200 may be a mono-frame provided in the form of a metal board made by integrating upper and lower surfaces and two opposite lateral surfaces. In addition, the module frame 200 may be made of a high-rigidity material, and the high-rigidity material may include fiber reinforced plastic (FRP) as a composite material. With the module frame 200 having high rigidity, the battery cells having high capacities and high swelling degrees may be controlled. Further, the module frame 200 may serve as a pack housing, thereby minimizing a pack housing structure and ensuring long-term reliability for sealing. In addition, because an upper portion of the module frame 200 serves as a pack cover, an upper housing may be excluded from the battery pack.

In this case, the type of battery cell is not particularly limited. The battery may be a pouch-type secondary battery or an angular secondary battery, and the battery may preferably be a pouch-type secondary battery.

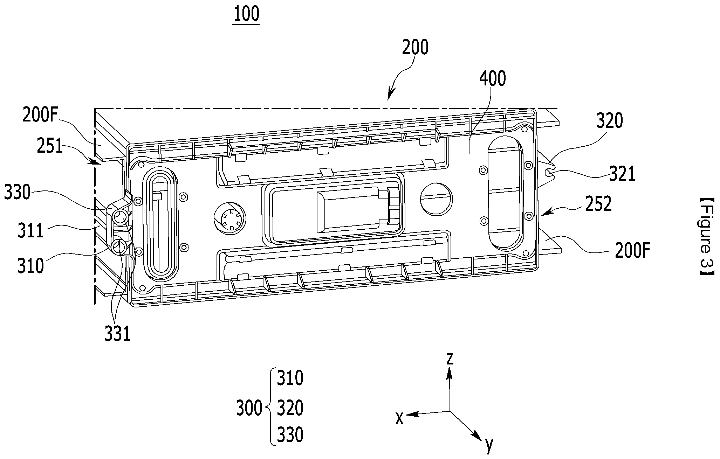

The plurality of battery modules 100 may be mounted to be spaced apart from one another and disposed in a direction in which the plurality of battery modules 100 faces one another. For example, endplates 400 (illustrated in FIG. 3), which are included in the battery modules 100, may be provided on the pair of battery modules 100, and disposed in a direction in which the endplates 400 face each other. The endplates 400 may be positioned at a first side (the y-axis direction) and a second side (the -y-axis direction) of the module frame 200 and cover the battery cell stack 120. The endplates may physically protect the battery cell stack 120 and the other electrical components from an external impact.

The lateral pack frames 1150 may be positioned while facing the endplates 400 of the battery module 100. Specifically, the lateral pack frames 1150 may be disposed to face the endplates 400 that do not face one another among the pair of battery modules 100.

The front pack frame 1160 and the rear pack frame 1170 may be positioned while surrounding the remaining lateral sides of the battery module 100, except for one portion of the battery module 100 surrounded by the lateral pack frame 1150. Specifically, the front pack frame 1160 and the rear pack frame 1170 may be positioned while surrounding a region of the battery module 100 in which the endplate 400 is not positioned.

The lateral pack frames 1150 may be positioned such that two opposite end portions thereof adjoin the front pack frame 1160 and the rear pack frame 1170.

The lateral pack frames 1150, the front pack frame 1160, and the rear pack frame 1170 may surround the plurality of battery modules 100 and protect the battery modules 100 from an external impact.

FIG. 3 is a perspective view of the battery module of the present disclosure.

With reference to FIG. 3, the battery module of the present disclosure includes module coupling portions 300 provided on the module frame 200 and the endplate 400.

The module coupling portions 300 may be provided on a lateral surface of the module frame 200 and a lateral surface of the endplate 400 (the x-axis direction and the -x-axis direction). The module coupling portions 300 may be protruding portions provided on the lateral surface of the module frame 200 and the lateral surface of the endplate 400. The module coupling portion 300 may be a region coupled to the lateral pack frame 1150 (see FIG. 2) by a coupling member. The module coupling portion 300 may be positioned while facing the lateral pack frame 1150.

The module coupling portions 300 may include first and second module coupling portions 310 and 320 provided on the lateral surfaces of the module frame 200, and a third module coupling portion 330 provided on the lateral surface of the endplate 400.

The first module coupling portion 310 may be positioned on a first lateral surface 251 of the module frame 200. The first module coupling portion 310 may be a portion where one region of the first lateral surface 251 of the module frame 200 protrudes.

The first module coupling portion 310 may include a hole opened partially. The first module coupling portion 310 may include a first hole 311, and a first opening portion 313 made by opening a part of an outer peripheral surface, i.e., an edge of the first hole 311.

The first opening portion 313 may be a portion made by opening a part of the outer peripheral surface of the first hole 311 toward the outside of the module frame 200. The first opening portion 313 may be a portion made by opening a part of the outer peripheral surface of the first hole 311 in a direction opposite to the first lateral surface 251. Therefore, the first module coupling portion 310 may be a C-shaped hole.

The second module coupling portion 320 may be positioned on a second lateral surface 252 of the module frame 200. The second lateral surface 252 may be one lateral surface of the module frame 200 opposite to the first lateral surface 251. The second module coupling portion 320 may be a portion where one region of the second lateral surface 252 of the module frame 200 protrudes.

The second module coupling portion 320 may include a hole opened partially. The second module coupling portion 320 may include a second hole 321, and a second opening portion 323 made by opening a part of an outer peripheral surface, i.e., an edge of the second hole 321.

The second opening portion 323 may be a portion made by opening a part of the outer peripheral surface of the second hole 321 toward the outside of the module frame 200. The second opening portion 323 may be a portion made by opening a part of the outer peripheral surface of the second hole 321 in a direction opposite to the second lateral surface 252. Therefore, the second module coupling portion 320 may have a C shape.

The first hole 311 of the first module coupling portion 310 and the second hole 321 of the second module coupling portion 320 may be opened in the opposite directions. That is, the first opening portion 313 and the second opening portion 323 may be opened in the opposite directions.

Unlike the first module coupling portion 310 and the second module coupling portion 320 of the present disclosure, a module coupling portion in the related art may be configured as a general hole. Specifically, the module coupling portion in the related art may be a hole provided in a region in which one lateral surface of the battery module protrudes. On the contrary, the module coupling portions 300, specifically, the first module coupling portion 310 and the second module coupling portion 320 of the present disclosure may include a first module opening portion 313 and a second module opening portion 323 made by opening one region of an outer peripheral surface of the first hole 311 and one region of an outer peripheral surface of the second hole 321. That is, the first module coupling portion 310 and the second module coupling portion 320 may each be a C-shaped hole.

Therefore, in comparison with the module coupling portion in the related art, the first module coupling portion 310 and the second module coupling portion 320 of the present disclosure, which include the holes each made by opening one region of the outer peripheral surface thereof, may protrude less toward the lateral side (the x-axis direction) of the battery module 100 by the first module opening portion 313 and the second module opening portion 323. Therefore, in comparison with the related art, a distance between the adjacent battery modules 100 may decrease, and an energy density of the battery pack may increase.

The third module coupling portion 330 may be positioned at a lateral end of the endplate 400. The third module coupling portion 330 may be positioned at the lateral end of the endplate 400 corresponding to the first lateral surface 251 of the battery module 100 on which the first module coupling portion 310 is positioned. The third module coupling portion 330 may be positioned at the lateral end of the endplate 400 that faces the second lateral surface 252 of the battery module 100 on which the second module coupling portion 320 is positioned.

The third module coupling portion 330 may be one region protruding from the lateral end of the endplate 400. In this case, the third module coupling portion 330 may protrude from the endplate 400 and positioned on the same x-z plane as the endplate 400. In addition, the lateral end of the endplate 400 is aligned on the same plane as the first lateral surface 251 of the module frame 200. In an assembled state, the lateral end of the endplate 400 may be an extension surface of the first lateral surface 251, and the third module coupling portion 330 may have a shape protruding from the lateral end of the endplate 400.

The third module coupling portion 330 may have third holes 331. The third holes 331 may be provided as at least two third holes 331 and positioned on the same line in the height direction of the battery module 100 (the z-axis direction).

In addition, it can be seen that the first and second holes 311 and 321 having C shapes are formed as widths of the portions of the first and second module coupling portions 310 and 320, which protrude from the module frame 200, are decreased. It can be seen that the third hole 331 is formed as a width of the portion of the third module coupling portion 330, which protrudes from the endplate 400, decreases.

In other words, it can be seen that the shapes of the first and second module coupling portions 310 and 320, which are protruding portions, are widened in a direction from the first and second holes 311 and 321 toward the module frame 200, and the shape of the third module coupling portion 330, which is the protruding portion, is widened in a direction from the third hole 331 toward the endplate 400.

In general, in comparison with the case in which the module coupling portion 300 protrudes by means of the shape of the hole, this structure is formed as the peripheral portion of the hole is widened. Therefore, the rigidity of the module coupling portion 300 may be increased, and the durability of the battery may be increased.

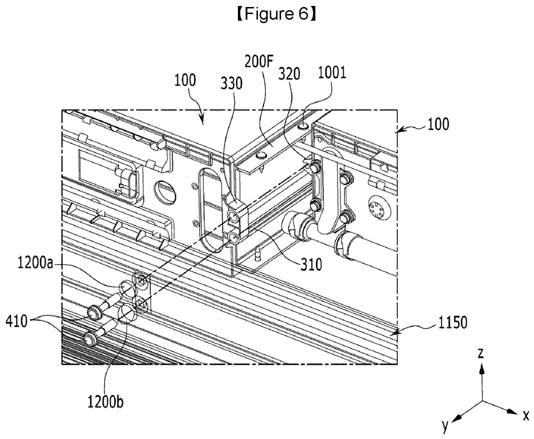

Meanwhile, the adjacent battery modules 100 may be coupled by module fastening members 1001 (illustrated in FIG. 6) such as a bolt in a state in which flange portions 200F formed on the lateral surfaces of the module frames 200 overlap each other. In this case, the flange portions 200F may be formed one by one at upper and lower sides of the lateral surface of the module frame 200. With the coupling structure, a pack housing configuration may be excluded, such that the number of pack housing components may be minimized. In particular, the module fastening members 1001 are coupled to the overlap portions of the flange portions 200F formed at the upper and lower sides of the lateral surfaces of the flange portions 200F, such that components such as rigid beams may be excluded. In other words, on the overlap portions of the flange portions 200F, the coupling portions including the module fastening members 1001 may serve as the rigid beam in the pack structure. The module fastening members 1001 may be provided as a plurality of module fastening members 1001 spaced apart from one another in a longitudinal direction (y-axis direction) of the battery module 100.

Hereinafter, a structural connection relationship between the first module coupling portion 310, the second module coupling portion 320, and the third module coupling portion 330 will be described in more detail.

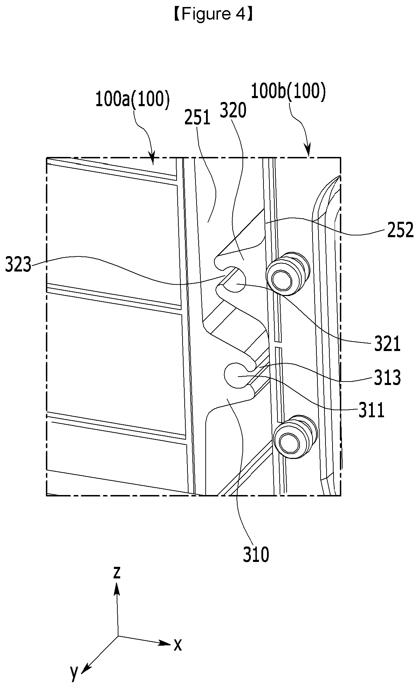

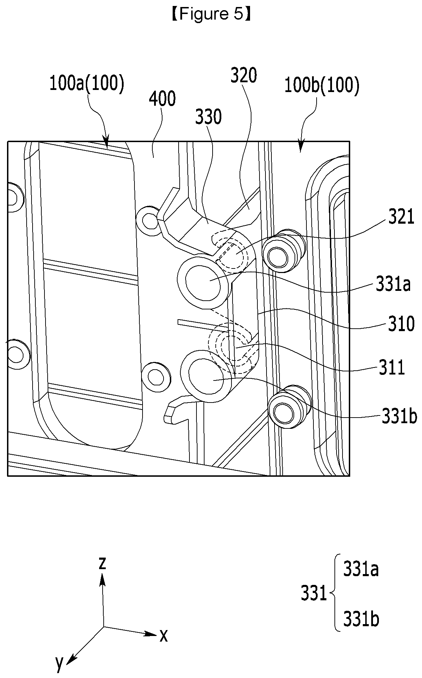

FIG. 4 is a cross-sectional view illustrating the coupling portion of the battery module of the present disclosure. FIG. 5 is a transparent perspective view illustrating the coupling portion of the battery module the present disclosure.

With reference to FIGS. 4 and 5, in case that the adjacent battery modules 100 of the present disclosure are mounted, the first module coupling portion 310, the second module coupling portion 320, and the third module coupling portion 330 may be positioned to overlap one another.

Specifically, the first module coupling portion 310 and the third module coupling portion 330 may be positioned on the same line and the second module coupling portion 320 and the third module coupling portion 330 may be positioned on the same line in the longitudinal direction (y-axis direction) of the battery module 100.

Further, with reference to FIG. 4, in the state in which the plurality of battery modules 100 is mounted on the battery pack, the first module coupling portion 310 and the second module coupling portion 320 may be respectively positioned on the adjacent battery modules 100. Specifically, when the first module coupling portion 310 is positioned on the first lateral surface of one battery module 100a, the second module coupling portion 320 may be positioned on the second lateral surface of the battery module 100b adjacent to one battery module 100a.

That is, in the state in which the plurality of battery modules 100 is mounted on the battery pack, the first module coupling portion 310 and the second module coupling portion 320 may be disposed on the same line in the height direction (z-axis direction) of the battery module 100. Specifically, in the height direction (z-axis direction) of the battery module 100, the first module coupling portion 310 may be provided at a position lower than the second module coupling portion 320. Therefore, when the plurality of battery modules 100a and 100b is mounted and arranged, the first module coupling portion 310 and the second module coupling portion 320 may be disposed at different heights and positioned to overlap each other on a single line parallel to the height direction (z-axis direction).

However, the position is illustrative and is not limited thereto. The second module coupling portion 320 may be provided at a position lower than the first module coupling portion 310.

The first module coupling portion 310 and the second module coupling portion 320 may be provided to extend in the longitudinal direction (y-axis direction) of the battery module 100. Specifically, the first module opening portion 313 of the first module coupling portion 310 and the second module opening portion 323 of the second module coupling portion 320 may be provided to extend in the longitudinal direction (y-axis direction) of the battery module 100.

In this case, degrees to which the first and second module coupling portions 310 and 320 protrude from the battery module 100 may be connected to each other. Specifically, the degrees to which the first and second module coupling portions 310 and 320 protrude from the battery module 100 may be equal to each other.

The third module coupling portion 330 may be positioned to be closer to the lateral pack frame 1150 (to be described below with reference to FIG. 6) than the first and second module coupling portions 310 and 320 to the lateral pack frame 1150. Specifically, with reference to FIG. 5, the third module coupling portion 330 may be positioned to be closer to the front or rear surface of the battery module 100 than the first and second module coupling portions 310 and 320 to the front or rear surface of the battery module 100.

The third holes 331 of the third module coupling portion 330 may respectively correspond to the first module coupling portion 310 and the second module coupling portion 320.

Specifically, the third module coupling portion 330 may include a third-first hole 331a and a third-second hole 331b. The third-first hole 331a and the third-second hole 331b may be positioned on the same line in the height direction (z-axis direction) of the battery module 100. In this case, the third-first hole 331a may be positioned at a position higher than the third-second hole 332b.

In the present drawings, the third-first hole 331a may correspond to the second module coupling portion 320, and the third-second hole 331b may correspond to the first module coupling portion 310. More specifically, the third-first hole 331a may be positioned at the same position as the second module coupling portion 320 in the height direction (z-axis direction) of the battery module 100, and the third-second hole 331b may be positioned at the same position as the first module coupling portion 310 in the height direction (z-axis direction) of the battery module 100.

In this case, the third-first hole 331a may be positioned at the same height as the second hole 321 of the second module coupling portion 320, and the third-first hole 331a and the second hole 321 may have the same size. The third-second hole 331b may be positioned at the same height as the first hole 311 of the first module coupling portion 310, and the third-second hole 331b and the first hole 311 may have the same size.

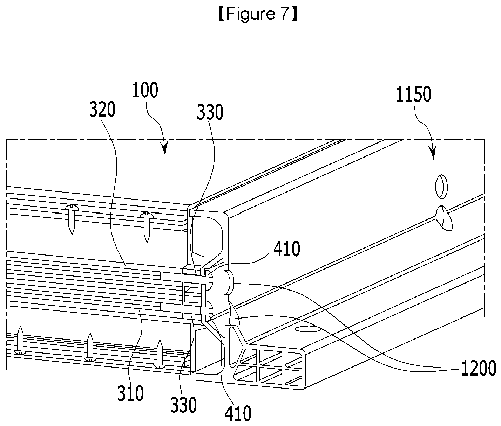

FIG. 6 is a perspective view illustrating a state in which the battery module and the battery pack of the present disclosure are coupled. FIG. 7 is a cross-sectional view illustrating a state in which the battery module and the battery pack of the present disclosure are coupled.

With reference to FIGS. 6 and 7, the lateral pack frame 1150 may be fixedly coupled to the battery module 100 by coupling members 410.

The coupling member 410 may fixedly couple the lateral pack frame 1150, the battery module 100, and the adjacent battery modules 100. The coupling members 410 may be fixedly coupled to pack coupling portions 1200, which is provided on the lateral pack frame 1150, and fixedly coupled to the module coupling portion 300 provided on the battery module 100.

The pack coupling portion 1200 may be a hole provided in the lateral pack frame 1150. The pack coupling portions 1200 may be at least two holes provided in the lateral pack frame 1150.

The pack coupling portions 1200 may include a first pack coupling portion 1200a and a second pack coupling portion 1200b. The first pack coupling portion 1200a and the second pack coupling portion 1200b may be positioned on the same line in the height direction (z-axis direction) of the lateral pack frame 1150. In this case, the first pack coupling portion 1200a may be provided at a position higher than the second pack coupling portion 1200b.

The pack coupling portion 1200 may be a hole provided at a position corresponding to the module coupling portion 300. The first pack coupling portion 1200a may be provided at a position corresponding to the second module coupling portion 320 and the third module coupling portion 330, and the second pack coupling portion 1200b may be provided at a position corresponding to the first module coupling portion 310 and the third module coupling portion 330. Specifically, the first pack coupling portion 1200a may be provided at a position corresponding to the second hole 321 of the second module coupling portion 320 and the third-first hole 331a of the third module coupling portion 330, and the second pack coupling portion 1200b may be provided at a position corresponding to the first hole 311 of the first module coupling portion 310 and the third-second hole 331b of the third module coupling portion 330.

The coupling member 410, which fixedly couples the pack coupling portion 1200 and the module coupling portion 300, may sequentially penetrate the pack coupling portion 1200 and the module coupling portion 300. Specifically, the coupling member 410 penetrates the pack coupling portion 1200 of the lateral pack frame 1150 and penetrates the module coupling portion 300 of the battery module 100, such that the lateral pack frame 1150 and the battery module 100 may be fixedly coupled.

The coupling members 410 may respectively penetrate the first pack coupling portion 1200a and the second pack coupling portion 1200b of the lateral pack frame. One coupling member 410 may sequentially penetrate the first pack coupling portion 1200a, the third-first hole 331a of the third module coupling portion 330, and the second module coupling portion 320. Another coupling member 410 may sequentially penetrate the second pack coupling portion 1200b, the third-second hole 331b of the third module coupling portion 330, and the first module coupling portion 310.

For example, the coupling member 410 may be a screw. In this case, a length (y-axis direction) of the coupling member 410 may be long enough to penetrate the first module coupling portion 310 or the second module coupling portion 320. Specifically, the length (y-axis direction) of the coupling member 410 may be longer than a sum of lengths (y-axis direction) of the lateral pack frame 1150, the first module coupling portion 310 or the second module coupling portion 320, and the third module coupling portion 330.

In case that the coupling member 410 is a screw, an angle of a screw thread, which constitutes a body of the coupling member 410, may be about 60 degrees. Therefore, in case that the coupling member 410 is coupled to the module coupling portion 300, a force may be applied by a screw angle in a radial direction in which the hole of the module coupling portion 300 increases. Therefore, a fixing force between the coupling member 410 and the battery module 100 may be increased.

Additionally, because the coupling members 410 are fixedly coupled to the pack coupling portion 1200 and the at least two module coupling portions 300, a fixing force between the battery pack and the battery module may be increased, and the safety of the battery may also be improved.

Further, because the coupling members 410 are more securely fixed to the lateral pack frame 1150 and the battery module 100, an upper pack frame for fixing the battery module 100 may not be additionally provided. In this case, as described above, the upper and lower portions of the module frame 200 may be made of a high-rigidity material, thereby constituting the upper and lower portions of the battery pack 1000. Therefore, the upper and lower portions of the module frame 200, which are made of a high-rigidity material, may define upper and lower covers of a pack frame 1100 without additional upper and lower covers, and the lateral pack frame 1150 and the battery module 100 are securely coupled by the coupling members 410, such that the manufacturing costs of the battery may be reduced, the weight of the battery may be reduced, and the energy density of the battery may be improved.

The above-mentioned battery module and the battery pack including the battery module may be applied to various devices. Examples of such devices may include transportation means such as an electric bicycle, an electric vehicle, and a hybrid vehicle, but the present disclosure is not limited thereto, and may be applied to various devices that may use the battery module and the battery pack including the battery module. These configurations may also belong to the scope of the present disclosure.

Although preferred examples of the present disclosure have been described in detail hereinabove, the right scope of the present disclosure is not limited thereto, and many variations and modifications of those skilled in the art using the basic concept of the present disclosure, which is defined in the following claims, will also belong to the right scope of the present disclosure.

### <Description of Reference Numerals>

100: Battery module
200: Module frame
300: Module coupling portion
310: First module coupling portion
311: First hole
313: First module opening portion
320: Second module coupling portion
321: Second hole
323: Second module opening portion
330: Third module coupling portion
331: Third hole
331a: Third-first hole
331b: Third-second hole
400: Endplate
410: Coupling member
1000: Battery pack
1150: Lateral pack frame
1200: Pack coupling portion
1200a: First pack coupling portion
1200b: Second pack coupling portion

## Claims

1. A battery module comprising:
a battery cell stack in which a plurality of battery cells is stacked;
a module frame configured to accommodate the battery cell stack;
an endplate configured to cover the battery cell stack exposed by the module frame; and
module coupling portions that are protruding portions provided on a lateral surface of the module frame and a lateral surface of the endplate,
wherein the module coupling portions include holes penetrated by coupling members.

2. The battery module of claim 1, wherein:
the module coupling portions comprise:
a first module coupling portion positioned on a first lateral surface of the module frame;
a second module coupling portion positioned on a second lateral surface that is one lateral surface opposite to the first lateral surface of the module frame; and
a third module coupling portion protruding from a lateral end of the endplate.

3. The battery module of claim 2, wherein:
the battery module is provided as a plurality of battery modules, and
the first module coupling portion provided on one battery module is positioned while facing the second module coupling portion provided on another battery module.

4. The battery module of claim 3, wherein:
the first module coupling portion and the second module coupling portion are positioned at different heights of the battery module and positioned on the same line in a longitudinal direction.

5. The battery module of claim 3, wherein:
the first module coupling portion is a C-shaped hole including a first hole and a first opening portion that is a portion made by opening a part of an outer peripheral surface that is an edge of the first hole,
the second module coupling portion is a C-shaped hole including a second hole and a second opening portion that is a portion made by opening a part of an outer peripheral surface that is an edge of the second hole, and
the third module coupling portion includes third holes that are at least two holes.

6. The battery module of claim 5, wherein:
the first opening portion and the second opening portion are opened in opposite directions.

7. The battery module of claim 5, wherein:
the third holes are positioned on the same line in a height direction of the battery module.

8. The battery module of claim 5, wherein:
the third holes comprise a third-first hole and a third-second hole,
the third-first hole is positioned to correspond to the first hole, and the third-second hole is positioned to correspond to the second hole.

9. The battery module of claim 8, wherein:
the coupling members
sequentially penetrate the third-first hole and the first hole and
sequentially penetrate the third-second hole and the second hole.

10. The battery module of claim 1, further comprising:
a flange portion formed on a lateral surface of the module frame.

11. A battery pack comprising: the plurality of battery modules according to claim 1; and a battery pack frame comprising a lateral pack frame configured to surround the plurality of battery modules,
wherein a first battery module and a second battery module among the plurality of battery modules are adjacent to each other, and
wherein the battery pack comprises coupling members configured to fixedly couple the first battery module, the second battery module, and the battery pack frame.

12. The battery pack of claim 11, wherein:
the coupling members are fixedly coupled to pack coupling portions provided on the battery pack frame and module coupling portions provided on the first and second battery modules.

13. The battery pack of claim 12, wherein:
the pack coupling portions are at least two holes provided in the lateral pack frame, and
the at least two holes are a first pack coupling portion and a second pack coupling portion.

14. The battery pack of claim 13, wherein:
the first pack coupling portion and the second pack coupling portion are positioned at positions corresponding to the module coupling portions and positioned on the same line in a height direction of the lateral pack frame.

15. The battery pack of claim 13, wherein:
the first pack coupling portion is provided at a position corresponding to a third-first hole that is one of a hole of a second module coupling portion positioned on a second lateral surface of the module frame of the first battery module and a hole of a third module coupling portion positioned at a lateral end of an endplate of the second battery module.

16. The battery pack of claim 13, wherein:
the second pack coupling portion is provided at a position corresponding to a third-second hole that is one of a hole of a first module coupling portion positioned on a first lateral surface of the module frame of the second battery module and a hole of a third module coupling portion positioned at a lateral end of an endplate of the second battery module.

17. The battery pack of claim 13, wherein:
the coupling members sequentially penetrate the first pack coupling portion and the module coupling portion and sequentially penetrate the second pack coupling portion and the module coupling portion.

18. The battery pack of claim 11, wherein:
an overall structure of the battery pack frame has a shape in which upper and lower portions of the plurality of battery modules are exposed.

19. The battery pack of claim 11, wherein:
the first and second battery modules further comprise flange portions formed on lateral surfaces of the module frames, and
wherein the flange portion of the first battery module and the flange portion of the second battery module are coupled by a module fastening member in a state in which the flange portion of the first battery module and the flange portion of the second battery module overlap each other.

20. The battery pack of claim 11, wherein:
a length of the coupling member is longer than a sum of lengths of the lateral pack frame and the module coupling portion.
